(19) Europäisches Patentamt
European Patent Office
Office européen des brevets

(11) Veröffentlichungsnummer : **0 083 797**
**B1**

(12) # EUROPÄISCHE PATENTSCHRIFT

(45) Veröffentlichungstag der Patentschrift : **13.03.85**

(21) Anmeldenummer : **82112045.8**

(22) Anmeldetag : **28.12.82**

(51) Int. Cl.[4] : **E 06 B 3/66**, B 32 B 17/10, C 03 C 27/10, C 03 C 27/04, C 08 G 18/44, C 09 K 3/10

(54) **Verwendung von Ein- oder Mehrkomponentensystemen als bzw. zur Herstellung von Verbundmassen für Glaskonstruktionen.**

(30) Priorität : **09.01.82 DE 3200430**

(43) Veröffentlichungstag der Anmeldung : **20.07.83 Patentblatt 83/29**

(45) Bekanntmachung des Hinweises auf die Patenterteilung : **13.03.85 Patentblatt 85/11**

(84) Benannte Vertragsstaaten : **AT BE CH DE FR GB IT LI NL SE**

(56) Entgegenhaltungen :
**FR-A- 2 006 788**
**US-A- 4 153 594**

(73) Patentinhaber : **BAYER AG**
**Konzernverwaltung RP Patentabteilung**
**D-5090 Leverkusen 1 Bayerwerk (DE)**

(72) Erfinder : **Pedain, Josef, Dr.**
**Haferkamp 6**
**D-5000 Köln 80 (DE)**
Erfinder : **Wellner, Wolfgang, Dr.**
**Hahnenweg 8**
**D-5000 Köln 80 (DE)**
Erfinder : **König, Klaus, Dr.**
**Heymannstrasse 50**
**D-5090 Leverkusen 1 (DE)**
Erfinder : **Gruber, Hermann, Dr.**
**Paul-Klee-Strasse 87**
**D-5090 Leverkusen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 083 797 B1

**Beschreibung**

Die Erfindung betrifft die Verwendung von neuartigen, hydrolysestabilen Ein- oder Mehrkomponenten-Systemen auf Basis von organischen Polyisocyanaten und ausgewählten Polyhydroxylverbindungen als bzw. zur Herstellung von, gegenüber Chemikalien und UV-Licht stabilen Verbundmassen für Glaskonstruktionen.

Die Anwendung von Dichtstoffen und Beschichtungsmitteln für Isolierglasscheiben gewinnt im Zuge der modernen Hochbauweise ständig an Bedeutung. Verwendung finden für diesen Zweck im wesentlichen Polysulfidrohstoffe, die eine recht gute Dauerhaftung auf Glas zeigen (vgl. z. B. « Adhäsion » (1970), *8*, Seiten 287-290, insbesondere Seite 290). Diese Dichtstoffe weisen jedoch erhebliche Nachteile auf. Sie können aufgrund ihrer Zusammensetzung beim Verarbeiten zu starker Geruchsbelästigung führen. Ein weiterer Nachteil der Polysulfid-Dichtstoffe liegt in ihrem Härtungsmechanismus begründet. Bei der Härtung muß ein bestimmter, definierter pH-Wert-Bereich eingehalten werden. Für die Praxis bedeutet dieses vom pH-Wert abhängige Härtungsverhalten Schwierigkeiten in der Anpassung an vorgegebene Fertigungsbedingungen. Auch die Verwendung von Schwermetalloxiden wie Bleioxid oder Manganoxid ist nicht einfach und erfordert äußerst sorgfältige Einhaltung von Verarbeitungsvorschriften, damit eine Gesundheitsgefährdung vermieden werden kann. Dadurch können Verluste entstehen, die infolge des hohen Preises der Bindemittel eine Erhöhung der Baukosten verursachen.

Es hat deshalb nicht an Versuchen gefehlt, auch für diesen Zweck die bewährten Polyurethanbindemittel einzusetzen. Bekanntlich finden Polyurethan-Dichtungsmittel zahlreiche Anwendungen. In Zwei- bzw. auch Einkomponentenverfahren werden z. B. im Bautenschutz dauerelastische Dichtstoffe auf Polyurethanbasis erfolgreich eingesetzt (vgl. z. B. US-A-4 153 594). Für spezielle Anwendungsgebiete, insbesondere bezüglich ihrer Verwendbarkeit als Verbundmassen für Glaskonstruktionen zeigen jedoch die herkömmlichen Dichtungsmaterialien auf Polyurethanbasis noch unbefriedigende Eigenschaften. So weisen die bekannten Systeme insbesondere oft eine mangelhafte Haftung an Glas auf. Dies zeigt sich insbesondere bei einer Einstrahlung von Sonnenlicht auf die Kontaktfläche Dichtstoff/Glas, was im Laufe der Zeit zu einer starken Haftverminderung führt. Behelfslösungen können darin bestehen, vor der Applikation der Dichtstoffe lichtabsorbierende, d. h. beispielsweise Ruß als Pigment enthaltende Primer auf die Gläser aufzubringen. Der optische Eindruck der damit abgedichteten Bauteile aus Glas leidet naturgemäß durch eine solche Pigmentierung, so daß die herkömmlichen Polyurethan-Dichtstoffe bei der modernen Hochbauweise, bei der Doppelglas- bzw. Isolierglasscheiben eine große Rolle spielen, kaum Eingang gefunden haben. Ein weiterer Grund hierfür liegt auch in dem Umstand begründet, daß die Polyurethansysteme des Standes der Technik nicht nur eine mangelhafte Stabilität gegenüber UV-Licht aufweisen, sondern auch zur Verhinderung einer unerwünschten Wasserdampfdiffusion in den Innenraum der Doppelglaskonstruktionen ungeeignet sind.

Es war daher die der Erfindung vorliegende Aufgabe, neue Verbundmassen auf Polyurethanbasis für Glaskonstruktionen zur Verfügung zu stellen, die lösungsmittelfrei bzw. lösungsmittelarm verarbeitbar und nicht mit den genannten Nachteilen der bekannten Polyurethansysteme behaftet sind.

Diese Aufgabe konnte durch die nachstehend näher beschriebene erfindungsgemäße Verwendung ausgewählter Ein- und Mehrkomponenten-Systeme gelöst werden.

Gegenstand der Erfindung ist die Verwendung von Ein- oder Mehrkomponenten-Systemen, die aus

a) einer Polyisocyanatkomponente, bestehend aus mindestens einem organischen Polyisocyanat und

b) einer Polyolkomponente, bestehend aus mindestens einem Dihydroxypolyestercarbonat des Molekulargewichts 800 bis 3 000, das ein Umsetzungsprodukt aus (i) Hexandiol-1,6, (ii) ε-Caprolacton und/oder ε-Hydroxycapronsäure und (iii) Diarylcarbonaten unter Einhaltung eines Molverhältnisses (i) : (ii) von 4 : 1 bis 1 : 3 darstellt, welches gegebenenfalls im Gemisch mit bis zu 40 Gew.-%, bezogen auf die Gesamtmenge der Komponente b) an anderen, gegebenenfalls Estergruppen aufweisenden Polyolen des Molekulargewichts 62-4 000 vorliegt,

in einem NCO/OH-Äquivalentverhältnis von 0,8 bis 1,3 entsprechenden Menge oder aus

c) einem NCO-Präpolymeren, welches durch Umsetzung der Polyolkomponente b) mit überschüssigen Mengen der Polyisocyanatkomponente a) erhalten worden ist und welches gegebenenfalls im Gemisch mit bis zu ca. 30 Gew.-%, bezogen auf Präpolymer, an anderen organischen Polyisocyanaten als den zu seiner Herstellung verwendeten vorliegt, und gegebenenfalls

d) bis zu insgesamt 30 Gew.-%, bezogen auf das NCO-Präpolymer der Komponente c) an diprimären, aromatischen Diaminen des Molekulargewichtsbereichs 108-400 und/oder an, zwei blockierte, feuchtigkeitsaktivierbare Aminogruppen aufweisenden Kettenverlängerungsmitteln, ausgewählt aus der Gruppe bestehend aus Bis-aldiminen, Bis-ketiminen, Bis-enaminen und Bis-oxazolidinen, bestehen, als bzw. zur Herstellung von, gegebenenfalls weitere Hilfs- und Zusatzstoffe enthaltenden, selbsthärtenden oder durch den Einfluß von Feuchtigkeit aushärtbaren Verbundmassen für Glaskonstruktionen.

Die erfindungsgemäße Komponente a) besteht aus mindestens einem organischen Polyisocyanat der aus der Polyurethanchemie an sich bekannten Art. Bei diesen erfindungsgemäß geeigneten Polyisocyanaten handelt es sich u. a. um Verbindungen der Formel

$$Q(NCO)_n$$

in welcher

Q für einen aromatischen, gegebenenfalls Methylsubstituenten oder Methylenbrücken aufweisenden Kohlenwasserstoffrest mit insgesamt 6 bis 15 Kohlenstoffatomen, einen aliphatischen Kohlenwasserstoffrest mit 4 bis 18, vorzugsweise 6 bis 10, Kohlenstoffatomen, einen cycloaliphatischen Kohlenwasserstoffrest mit 6 bis 15 Kohlenstoffatomen oder einen Xylylenrest steht, und

n für eine ganze Zahl von 2 bis 5, vorzugsweise für 2 steht.

Typische Beispiele für erfindungsgemäß geeignete Polyisocyanate sind Tetramethylendiisocyanat, Hexamethylendiisocyanat, 1,12-Dodecandiisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (IPDI), Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, 3,2'- und/oder 3,4'-Diisocyanato-4-methyl-diphenylmethan, Naphthylen-1,5-diisocyanat, Triphenylmethan-4,4',4''-triisocyanat, Polyphenyl-polymethylen-polyisocyanate, wie sie durch Anilin-Formaldehyd-Kondensation und anschließende Phosgenierung erhalten und z. B. in den GB-A 874-430 und 848 671 beschrieben werden, Carbodiimidgruppen aufweisende Polyisocyanate, wie sie in der DE-C 1 092 007 beschrieben werden, Allophanatgruppen aufweisenae Polyisocyanate, wie sie z. B. in der GB-A 994 890, der BE-A 761 626 beschrieben werden, Isocyanuratgruppen aufweisende Polyisocyanate, wie sie z. B. in der US-A 4 288 586, in den DE-C 1 022 789, 1 222 067 und 1 027 394, in den DE-A 1 929 034, 2 004 048 und 2 839 133 oder in der EP-A 10 589 beschrieben werden, Urethangruppen aufweisende Polyisocyanate, wie sie z. B. in der BE-A 752 261 oder in der US-A 3 394 164 beschrieben werden, acylierte Harnstoffgruppen aufweisende Polyisocyanate gemäß der DE-C 1 230 778, Biuretgruppen aufweisende Polyisocyanate, wie sie z. B. in der DE-C 1 101 394, in der GB-A 889 050 und in der FR-A 7 017 514 beschrieben werden.

Bevorzugt einzusetzende Polyisocyanate sind IPDI, 4,4'-Diisocyanato-dicyclohexylmethan, Tris-(isocyanatohexyl)-biuret, gegebenenfalls im Gemisch mit seinen höheren Homologen, wie es beispielsweise in der DE-C 1 101 394 beschrieben ist, Tris-(isocyanatohexyl)-isocyanurat, gegebenenfalls im Gemisch mit seinen höheren Homologen, wie es beispielsweise in der EP-A 10 589 beschrieben ist und 4,4'-Diisocyanatodiphenylmethan bzw. dessen Gemische mit 2,4'-Diisocyanatodiphenylmethan und/oder mit seinen höheren Homologen, d. h. die an sich bekannten Phosgenierungsprodukte von Anilin/Formaldehyd-Kondensaten. Besonders gut geeignet sind auch die durch partielle Carbodiimidisierung der Isocyanatgruppen oder die durch partielle Urethanisierung der Isocyanatgruppen durch Umsetzung mit Polypropylenglykolen mit einem max. Molekulargewicht von 700 modifizierten, d. h. verflüssigten, Derivate des 4,4'-Diisocyanatodiphenylmethans.

Beliebige Gemische der beispielhaft genannten Polyisocyanate können erfindungsgemäß ebenfalls als Polyisocyanatkomponente a) zum Einsatz gelangen.

Bei der erfindungsgemäßen Komponente b) handelt es sich um Dihydroxypolyestercarbonate eines aus dem Hydroxylgruppengehalt errechenbaren Molekulargewichts von 800 bis 3 000, vorzugsweise 1 500 bis 2 500. Diese Dihydroxypolyestercarbonate stellen Umsetzungsprodukte aus (i) Hexandiol-1,6, (ii) ε-Caprolacton bzw. ε-Hydroxycapronsäure und (iii) Diarylcarbonaten dar, wobei das Molverhältnis von (i) zu (ii) zwischen 4 : 1 und 1 : 3, vorzugsweise zwischen 2 : 1 und 1 : 2 und besonders bevorzugt zwischen 1,2 : 1 und 1 : 1,2 gehalten wird. Die Herstellung derartiger Dihydroxypolycarbonate erfolgt nach an sich bekannten Verfahren (Houben-Weyl, XIV/2, S. 48) und ist beispielsweise auch in US-A 3 640 967 beschrieben. Zunächst wird hierzu Hexandiol-1,6 mit ε-Caprolacton bzw. ε-Hydroxycapronsäure unter Ringöffnung bzw. Wasseraustritt zu einem Esterglykol umgesetzt und dieses mit unterschüssigem Diarylcarbonat unter Abspaltung und Entfernung der entsprechenden Phenolverbindung thermisch in das entsprechende OH-Endgruppen enthaltende Polyester-Polycarbonat überführt. Als Diarylcarbonat sind zur Herstellung der im erfindungsgemäßen Verfahren verwendeten Polyole neben Diphenylcarbonat z. B. auch Dinaphthylcarbonat und Dikresylcarbonat geeignet.

Es ist erfindungswesentlich, daß die Dihydroxypolyestercarbonate unter Einhaltung der o. g. Mengenverhältnisse hergestellt werden, da Dihydroxycarbonate, die unter Verwendung anderer Mengenverhältnisse der Ausgangskomponenten (i) und (ii) hergestellt worden sind, einerseits einen zu hohen Schmelzpunkt für die erfindungsgemäße Verwendung aufweisen und andererseits zu Polyurethanen führen, die keine ausreichende Beständigkeit gegenüber Witterungseinflüssen aufweisen.

Der erfindungswesentliche Komponente b) kann neben den genannten Dihydroxypolyestercarbonaten bis zu 40 Gew.-%, vorzugsweise bis zu 20 Gew.-% an anderen, gegebenenfalls Estergruppen aufweisenden, Polyhydroxylverbindungen mit aliphatisch gebundenen Hydroxylgruppen aufweisen. Bei diesen Polyhydroxylverbindungen handelt es sich um solche eines rechnerischen Molekulargewichts von 62-4 000, vorzugsweise von 800-3 000, d. h. um niedermolekulare Polyole wie Ethylenglykol, Diethylenglykol, Propylenglykole, Butylenglykole, Hexylenglykole, Trimethylolpropan und Glycerin oder um Polyesterpolyole des genannten Molgewichtsbereichs, die z. B. aus den o. g. niedermolekularen Polyolen und Polycarbonsäuren aufgebaut sein können. Bevorzugt geeignet aus dieser Substanzklasse sind Polyester aus Hexandiol-1,6 und Adipinsäure oder Polycaprolactone, die durch ringöffnende Veresterung von ε-Caprolacton oder durch Wasserabspaltung aus ε-Hydroxycapronsäure entstehen.

Die erfindungsgemäße Verwendung kann, wie bereits oben angedeutet, nach 2 Varianten erfolgen.

Gemäß einer ersten Ausführungsform der erfindungsgemäßen Verwendung werden durch Abmischen der Komponenten a) und b) unter Einhaltung eines NCO/OH-Äquivalentverhältnisses von 0,8 bis 1,3, vorzugsweise 1,0 bis 1,1 selbsthärtende Zweikomponenten-Systeme hergestellt, die als Verbundmassen für Glaskonstruktionen oder zur Herstellung von Verbundmassen für Glaskonstruktionen geeignet sind. Dies bedeutet, daß die Gemische entweder als solche, d. h. ohne Mitverwendung von weiteren Hilfs- und Zusatzmitteln, als Verbundmassen zum Einsatz gelangen oder aber, daß die Gemische in Abmischung mit weiteren Hilfs- und Zusatzmitteln verwendet werden. Diese gegebenenfalls mitzuverwendenden Hilfs- und Zusatzmittel können entweder den Gemischen aus a) und b) oder den Einzelkomponenten vor deren Durchmischung hinzugefügt werden.

Als Hilfs- und Zusatzmittel kommen beispielsweise Lösungsmittel in Betracht, wie z. B. Ethylacetat, Butylacetat, Methylethylketon, Methylisobutylketon, Ethylenglykol-monoethylether-acetat, Toluol, Xylol, Testbenzin oder beliebige Gemische dieser Lösungsmittel. Hierbei ist jedoch hervorzuheben, daß die erfindungsgemäße Verwendung vorzugsweise lösungsmittelfrei oder nur unter Verwendung geringer Lösungsmittelmengen erfolgt. Die Lösungsmittel werden allenfalls in einer Menge von bis zu 40, vorzugsweise bis zu 20, Gew.-%, bezogen auf Verbundmasse, mitverwendet.

Weitere gegebenenfalls mitzuverwendende Hilfs- und Zusatzmittel sind z. B. Weichmacher wie z. B. Trikresylphosphat oder Phthalsäurediester, Chlorparaffine, Pigmente und Füllstoffe, wie Titanoxid, Bariumsulfat, Kreide, Ruß; Katalysatoren, wie z. B. N,N-Dimethylbenzylamin, N-Methylmorpholin, Bleioctoat oder Dibutylzinndilaurat; Verlaufmittel; Verdickungsmittel, gegebenenfalls Stabilisatoren, wie substituierte Phenole, organofunktionelle Silane als Haftvermittler.

Die den Füllstoffen und Pigmenten anhaftende Feuchtigkeit kann durch vorhergehende Trocknung oder durch Mitverwendung von wasseraufnehmenden Stoffen, wie z. B. Molekularsieb-Zeolithen, entfernt werden.

Gemäß einer zweiten Ausführungsform der erfindungsgemäßen Verwendung wird in einem ersten Reaktionsschritt durch Umsetzung der Komponenten a) und b) ein Isocyanatgruppen aufweisendes Präpolymer hergestellt. Diese Umsetzung erfolgt in an sich bekannter Weise unter Einhaltung eines NCO/OH-Äquivalentverhältnisses von 1,5 bis 15, vorzugsweise 2 bis 4, oder durch Umsetzung der Komponente b) mit einem hohen Überschuß der Komponente a) unter anschließender Entfernung, beispielsweise durch Destillation, zumindest eines Teils des nicht-umgesetzten Überschusses der Komponente a). Das so erhaltene Isocyanatgruppen aufweisende Präpolymer wird als solches oder im Gemisch mit bis zu ca. 30 Gew.-%, bezogen auf Präpolymer, an Polyisocyanaten der oben beispielhaft genannten Art eingesetzt, die von dem, zur Herstellung des Präpolymeren verwendeten, Polyisocyanat verschieden sind. Bei der erfindungsgemäßen Komponente c) handelt es sich somit um die genannten NCO-Präpolymeren oder um deren Gemische mit weiteren Polyisocyanaten der beispielhaft genannten Art. Die Komponente c) kann als solche oder unter Mitverwendung der oben beispielhaft genannten Hilfs- und Zusatzmittel als feuchtigkeitshärtbare Verbundmasse verwendet werden.

Gemäß einer bevorzugten Variante der 2. Ausführungsform des erfindungsgemäßen Verfahrens wird die Komponente c) jedoch vor ihrer Verwendung mit der erfindungsgemäßen Komponente d) abgemischt. Bei dieser Komponente d) handelt es sich um diprimäre aromatische Diamine des Molekulargewichtsbereichs 108-400 und/oder um blockierte, durch den Einfluß von Feuchtigkeit aktivierbare Diamin-Kettenverlängerungsmittel. Geeignete diprimäre aromatische Diamine sind beispielsweise p-Phenylendiamin, 2,4- und/oder 2,6-Diaminotoluol, 2,4'- und/oder 4,4'-Diaminodiphenylmethan, vorzugsweise jedoch um solche diprimäre aromatische Diamine, die in ortho-Stellung zu jeder Aminogruppe mindestens einen Alkylsubstituenten mit 2 bis 3 Kohlenstoffatomen und gegebenenfalls außerdem in weiteren ortho-Stellungen zu den Aminogruppen Methyl-Substituenten aufweisen. Typische Beispiele derartiger bevorzugter aromatischer Diamine sind 1-Methyl-3,5-diethyl-2,4-diaminobenzol, 1-Methyl-3,5-diethyl-2,6-diaminobenzol, 1,3,5-Triethyl-2,6-diaminobenzol, 3,5,3'-5'-Tetraethyl-4,4'-diaminodiphenylmethan, 3,5,3',5'-Tetraisopropyl-4,4'-diaminodiphenylmethan, 3,5-Diethyl-3'-5'-diisopropyl-4,4'-diamino-diphenylmethan oder beliebige Gemische derartiger Diamine. Bei den blockierten Diamin-Kettenverlängerungsmitteln handelt es sich um Bis-oxazolidine der beispielsweise in US-A 3 661 923, 3 864 335, 3 743 626 und insbesondere 4 002 601 beschriebenen Art oder um Bis-aldimine, Bis-ketimine oder Bis-enamine der beispielsweise in DE-B-1 520 139, DE-A-2 125 247, US-A-3 267 078 oder US-A-3 715 338 beschriebenen Art. Die erfindungsgemäß gut geeigneten, blockierten Diamine weisen im allgemeinen ein zwischen 196 und 600 liegendes Molekulargewicht auf. Die Komponente d) wird bei der bevorzugten Variante der 2. Ausführungsform der erfindungsgemäßen Verwendung den NCO-Präpolymeren in Mengen von 1 bis 30, vorzugsweise 5 bis 25 Gew.-%, bezogen auf die Komponente c), zugemischt. Besonders bevorzugt werden die beispielhaft genannten blockierten Diamin-Kettenverlängerungsmittel als ausschließliche Komponente d) eingesetzt. Auch die so erhaltenen Gemische aus c) und d) können als solche oder in Abmischung mit den oben beispielhaft genannten Hilfs- und Zusatzmitteln als Verbundmassen erfindungsgemäß verwendet werden. Bei diesen Verbundmassen handelt es sich im wesentlichen um feuchtigkeitshärtbare Verbundmassen, es sei denn, die Komponente d) enthält eine zur Aushärtung ausreichende Menge an freien Diaminen.

Es ist zur Lösung der o. g. erfindungsgemäßen Aufgabe weitgehend unerheblich, ob die erfindungsgemäße Verwendung nach der ersten oder nach der zweiten Ausführungsform stattfindet. Wesentlich ist einzig und allein, daß in den Verbundmassen die erfindungswesentlichen Dihydroxypolyestercarbonate

vorliegen. Die beschriebende Variationsbreite der erfindungsgemäßen Verwendung bezüglich der Art und der Mengenverhältnisse der Ausgangsmaterialien gestattet jedoch eine einfache Einstellung der mechanischen Eigenschaften der letztlich erhaltenen, ausgehärteten Dichtungsmassen. Die Aushärtung der erfindungsgemäßen Verbundmassen ist bei der zweiten Ausführungsform der erfindungsgemäßen Verwendung selbstverständlich an das Vorhandensein von Luftfeuchtigkeit gebunden. Bei Abwesenheit von Luftfeuchtigkeit wird daher die erfindungsgemäße Verwendung ausschließlich gemäß erster Ausführungsform durchgeführt.

Die erfindungsgemäßen Verbundmassen eignen sich hervorragend zur Abdichtung von Glaskonstruktionen, insbesondere bei der Fabrikation von Isolierglasscheiben. Isolierglas besteht aus zwei oder mehreren Scheiben, die durch ein Hohlprofil, beispielsweise aus Metall, in dem jeweils erwünschten Abstand zueinander gehalten werden. Scheiben und Profil bilden hierbei eine Außenfuge. In diese Fuge wird die erfindungsgemäße Verbundmasse in flüssiger bzw. plastischer Form eingetragen und härtet je nach chemischer Zusammensetzung und Katalyse innerhalb von 1 bis 48 Stunden aus. Die ganze Konstruktion erfährt durch die Verbundmasse ihren Zusammenhalt. Hieraus folgt, daß an die mechanischen und sonstigen Eigenschaften der Verbundmassen besonders hohe Anforderungen zu stellen sind. Die erfindungsgemäßen Verbundmassen erfüllen diese Anforderungen in idealer Weise. Die Haftung zwischen Scheibe und Fuge ist sehr gut und verändert sich bei Alterung und bei Belichtung praktisch nicht. Die Wasserdampfdurchlässigkeit ist so gering, daß der Taupunkt in der Einheit auch nach langer Feuchtigkeitsbelastung nicht ansteigt. Von besonderem Vorteil ist auch der Umstand, daß die erfindungsgemäßen Verbundmassen auch bei niederen Temperaturen ihre Plastizität und Elastizität beibehalten.

Die erfindungsgemäßen Verbundmassen eignen sich auch zur Herstellung von Verglasungen beliebiger Art wie z. B. im Automobil-, Flugzeug-, Waggon- oder Hochbau.

Die nachfolgenden Beispiele dienen der weiteren Erläuterung der erfindungsgemäßen Verwendung.

In den Beispielen und Vergleichsversuchen werden die folgenden Polyole verwendet.

### Polyol A

Ein flüssiges Polyesterpolycarbonat, das aus Hexandiol-1,6, ε-Caprolacton und Diphenylcarbonat hergestellt ist, wobei das Molverhältnis der Reaktionspartner 7,85 : 7,85 : 6,85 beträgt (mittleres Molgewicht ca. 2 000 ; OHZ : 56).

### Polyol B

Wie Polyol A, Molverhältnis der Reaktionspartner = 6,43 : 9,64 : 5,43 (mittleres Molgewicht ca. 2 000 ; OHZ : 57).

### Polyol C

Polyether aus Propylenoxid, gestartet auf Propylenglykol (mittleres Molgewicht ca. 2 000 ; OHZ : 56).

### Polyol D

Flüssiger Polyester aus Adipinsäure, Butandiol-1,4, Ethandiol, Diethylenglykol (OHZ : 56 ; mittleres Molgewicht ca. 2 000).

### Beispiel 1

Dieses Beispiel zeigt die hohe Bewitterungsfähigkeit einer lösungsmittelfreien, weißen Vergußmasse.

100 Teile Polyol B werden mit 50 Teilen Titandioxid (vom Rutiltyp) und 5 Teilen Zeolithpulver über eine Kugelmühle abgemahlen. Man vermischt dann mit 20 Teilen eines lösungsmittelfreien Polyisocyanates, das ein monomerenfreies Biuretaddukt aus ca. 3 Mol Hexamethylendiisocyanat darstellt und eine Viskosität von 10 000 mPa · s/25 °C und einen NCO-Gehalt von 21,9 % aufweist.

Zu der Mischung fügt man vor der Verarbeitung noch 0,01 Teile Dibutylzinndilaurat als Katalysator. Die lösungsmittelfreie, flüssige Beschichtungsmasse ist eine Stunde bei 23 °C ohne wesentlichen Viskositätsanstieg haltbar und verarbeitbar.

Man beschichtet mit der Masse Glasplatten der Abmessung 30 × 15 cm durch Aufgießen und erhält nach der Aushärtung blasenfreie, glatte Beschichtungen mit einer Shore A Härte = 75 in einer Schichtdicke von ca. 0,5 mm. Nach einem Jahr Außenbewitterung im Florida-Klima zeigen die Oberflächen der Platten einen leichten Glanzverlust, jedoch keine Verfärbung, Risse oder Krakelierung.

### Beispiel 2 (Vergleichsversuch)

Beispiel 1 wird wiederholt, aber anstelle von Polyol B wird Polyol C eingesetzt.

Man erhält ebenfalls weiße Beschichtungen auf Glasplatten mit einer Shore A Härte = 60 und einer Schichtdicke von 0,5 mm.

Nach einem Jahr Außenbewitterung im Florida-Klima ist die Beschichtung ebenfalls nicht verfärbt, die Oberfläche kreidet aber stark, hat Risse, ist stark krakeliert und teilweise abgelöst.

Beispiel 3

Dieses Beispiel beschreibt die Herstellung einer lösungsmittelarmen, mit Luftfeuchtigkeit härtbaren Verbundmasse, die für konstruktive Abdichtungen von Windschutzscheiben im Automobilbau geeignet ist.

Aus 350 Gewichtsteilen Polyol A und 100 Gewichtsteilen 4,4'-Diphenylmethandiisocyanat stellt man durch Verrühren bei 60 °C ein NCO-Präpolymer her, das einen NCO-Gehalt von 4,1 % hat. Man verdünnt mit 150 Gew.-Teilen Butylbenzylphthalat, 40 Gew.-Teilen Xylol und vermischt mit 200 Gew.-Teilen Flammruß. Vor der Anwendung fügt man noch 4,5 Gew.-Teile Tosylisocyanat (Hilfsmittel zur Verbesserung der Lagerstabilität der Paste), 4 Gew.-Teile γ-Epoxypropyltriethoxysilan (Hilfsmittel zur Verbesserung der Haftung) und 0,6 Gew.-Teile Dibutylzinndilaurat (als Katalysator) hinzu.

In dieser Zusammensetzung hat die Verbundmasse bei Ausschluß von $H_2O$ eine Lagerstabilität von mindestens 3 Monaten. Bei 23 °C und 50 % rel. Luftfeuchte bildet die Verbundmasse innerhalb von 30 Minuten eine geschlossene Haut und härtet in etwa 3 Tagen mit einer Shore Härte A von ca. 70 aus.

Auf Glas zeigt die Verbundmasse sehr gute Haftungseigenschaften. Die gute Haftung bleibt auch bei Belichtung mit UV-Licht erhalten, ohne daß weitere Hilfsmittel, wie z. B. ein schwarz pigmentierter, spezieller UV-Schutzprimer, mitverwendet werden.

Setzt man im Vergleich hierzu eine entsprechende Verbundmasse auf Basis von Polyol C (Polyetherpolyurethan) ohne zusätzlichen UV-Schutzprimer ein, so löst sich dieser Dichtstoff nach 250 Stunden UV-belichtung vom Glas ab.

Beispiel 4

In diesem Beispiel werden die hochwertigen Eigenschaften einer erfindungsgemäßen Verbundmasse, vor allem die hohe Stabilität bei UV-Belastung, beschrieben und mit denen eines üblichen Polyurethans verglichen.

Durch Umsetzung von 400 Gew.-Teilen Polyol A bzw. Polyol C mit je 100 Gew.-Teilen 1-Isocyanato-3,3,5-trimethyl-5-isocyanatomethylcyclohexan bei 100 °C in 6 Stunden, stellt man sich 2 flüssige Präpolymere mit einem NCO-Gehalt von ca. 4 % her. Durch Vermischen mit verschiedenen Zusatzmitteln fertigt man 2 Verbundmassen an mit folgender Zusammensetzung :

| | |
|---|---|
| Prepolymer (aus Polyol A bzw. Polyol C) | 160 Gew.-Teile |
| Diisodecylphthalat | 120 Gew.-Teile |
| Kreidepulver (mit Oberfläche 80 $m^2/g$) | 220 Gew.-Teile |
| γ-Epoxypropyltriethoxysilan | 0,4 Gew.-Teile |
| 1-Methyl-3,5-diethyl-2,4-diaminobenzol | 11 Gew.-Teile |

Beide lösungsmittelfreie Verbundmassen sind während etwa einer Stunde verarbeitbar. Auf Fensterglas aufgebracht, weisen sie nach einem Tag Aushärtung eine gute Haftung auf. Mit einer Vitalux-Lampe von 300 W belichtet man aus einem Abstand von 30 cm die Haftflächen von Glas/Verbundmasse.

Ergebnis

Die Verbundmasse auf Basis von Polyol C läßt sich nach 200 Stunden Belichtung leicht von der Glasoberfläche ablösen. Die erfindungsgemäße Verbundmasse auf Basis von Polyol A zeigt nach 1 000 Stunden Bestrahlung noch unveränderte Haftung.

Die spezielle Eignung dieser erfindungsgemäßen Verbundmasse für die Abdichtung von Doppelglasscheiben wird auch durch weitere Messungen bestätigt : Der Wasserdampfdurchgang liegt bei 15 $g/m^2$ und Tag bei 1 mm Dicke, der μ-Faktor nach DIN 52 615 beträgt 5 300.

Aufgrund dieser Charakteristik (gute Haftung bei Belichtung und des geringen Wasserdampfdurchgangs) eignet sich die Verbundmasse gut für eine Anwendung im Isolierglasbau.

Beispiel 5

Dieses Beispiel zeigt die Herstellung einer feuchtigkeitshärtbaren, lösungsmittelarmen Verbundmasse, die unter Mitverwendung eines latenten Härters ausreagiert. Man benutzt das in Beispiel 4 beschriebene Präpolymer aus Polyol A und 1-Isocyanato-3,3,5-trimethyl-5-isocyanatomethylcyclohexan.

Man vermischt zur Herstellung der Verbundmasse folgene Substanzen :
100 Gew.-Teile Präpolymer
100 Gew.-Teile $C_{12}$-$C_{18}$-Alkylarylsulfonsäureester (als Plastifizierungsmittel)
5 Gew.-Teile Biuretgruppen aufweisendes Polyisocyanat auf Basis von Hexamethylendiisocyanat mit einem NCO-Gehalt von 21,9 %
10 Gew.-Teile Benzin (Kohlenwasserstoffgemisch mit Siedebereich 140-180 °C)
15 Gew.-Teile Kieselsäure pulvrig-dispers mit einer Oberfläche von 150 $m^2/g$
3 Gew.-Teile Ölsäure (als Katalysator)
26 Gew.-Teile N,N'-Bis-[(2-isopropyl-1,3-oxazolidin-3-yl)-ethoxycarbonyl]-1,6-diaminohexan.

Das Gemisch der Komponenten bildet eine über mehrere Monate lagerfähige Einkomponenten-Dichtungsmasse, die an der Luft bei 23 °C und 50 % rel. Feuchte innerhalb von 10 Minuten eine geschlossene Haut bildet und zu einem elastischen Material aushärtet. Diese Verbundmasse eignet sich besonders für die Abdichtung von Dehnungs- und Anschlußfugen im Glasbau.

## Beispiel 6

In diesem Beispiel wird eine erfindungsgemäße Verbundmasse mit einer nicht-erfindungsgemäßen Verbundmasse auf Basis eines Polyurethans verglichen.

Man vermischt jeweils 100 Gew.-Teile Polyol A, Polyol C und Polyol D mit 14 Gew.-Teilen eines rohen Phosgenierungsproduktes eines Anilin/Formaldehyd-Kondensaten, das 34 % 4,4'-Diphenylmethandiisocyanat, 10 % 2,4'-Diphenylmethandiisocyanat und 56 % höherkernige Tri- und Polyisocyanate enthält. Man gießt 10 mm dicke Schichten, läßt aushärten und stellt Prüfstäbe her mit den Abmessungen 120 × 15 × 10 mm. Diese werden 10 Tage bei 80 °C in Prüfmedien gelagert. Anschließend wird die Gewichtsveränderung gemessen.

Ergebnis

| Produkt aus Polyol | Wasser | Prüfmedien<br>10 %ige $H_2SO_4$ | 10 %ige KOH |
|---|---|---|---|
| A | + 3,7 % | + 1,3 % | 0 % |
| C | + 6,5 % | + 8,7 % | +3,8 % |
| D | +10,3 % | -54 % | Probestab zerstört |

Diese Ergebnisse zeigen, daß nur die erfindungsgemäße Verbundmasse für die Herstellung von Isolierglasabdichtungen geeignet ist.

Dieses Ergebnis wird auch durch Messungen der Undurchlässigkeit für Wasserdampf bestätigt :

| Produkt aus Polyol | $\mu$-Faktor bestimmt nach DIN 52 615 |
|---|---|
| A | 2100 |
| C | 850 |
| D | 630 |

## Beispiel 7

Mit den in Beispiel 6 hergestellten Polyurethanen werden weitere Untersuchungen durchgeführt, um die Vorteile der erfindungsgemäßen Verbundmassen zu erläutern.

Die Polyurethane aus Polyol A und Polyol C werden 30 Minuten bei 180 °C gelagert und danach die Änderung der Eigenschaften geprüft.

| Polyurethan aus Polyol C, Beispiel 6 | Anfangswert | Endwert |
|---|---|---|
| Shore Härte A | 60 | 60 |
| Reißfestigkeit DIN 53 455 | 3,1 $N/mm^2$ | 4 $N/mm^2$ |
| Bruchdehnung DIN 53 455 | 275 % | 470 % |
| Shore Härte A | 30 | 0 |
| Reißfestigkeit DIN 53 455 | 1,8 $N/mm^2$ | nicht mehr meßbar, Produkt durch Wärmebelastung verflüssigt |
| Bruchdehnung DIN 53 455 | 230 % | |

**Anspruch**

Verwendung von Ein- oder Mehrkomponenten-Systemen, die aus

a) einer Polyisocyanatkomponente, bestehend aus mindestens einem organischen Polyisocyanat und

b) einer Polyolkomponente, bestehend aus mindestens einem Dihydroxypolyestercarbonat des Molekulargewichts 800 bis 3 000, das ein Umsetzungsprodukt aus (i) Hexandiol-1,6, (ii) ε-Caprolacton und/oder ε-Hydroxycapronsäure und (iii) Diarylcarbonaten unter Einhaltung eines Molverhältnisses (i) : (ii) von 4 : 1 bis 1 : 3 darstellt, welches gegebenenfalls im Gemisch mit bis zu 40 Gew.-%, bezogen auf die Gesamtmenge der Komponente b) an anderen, gegebenenfalls Estergruppen aufweisenden Polyolen des Molekulargewichts 62-4 000 vorliegt,

in einem NCO/OH-Äquivalentverhältnis von 0,8 bis 1,3 entsprechenden Menge oder aus

c) einem NCO-Präpolymeren, welches durch Umsetzung der Polyolkomponente b) mit überschüssigen Mengen der Polyisocyanatkomponente a) erhalten worden ist und welches gegebenenfalls im Gemisch mit bis zu ca. 30 Gew.-%, bezogen auf Präpolymer, an anderen organischen Polyisocyanaten als den zu seiner Herstellung verwendeten vorliegt, und gegebenenfalls,

d) bis zu insgesamt 30 Gew.-%, bezogen auf das NCO-Präpolymer der Komponente c) an diprimären, aromatischen Diaminen des Molekulargewichtsbereichs 108-400 und/oder an, zwei blockierte, feuchtigkeitsaktivierbare Aminogruppen aufweisenden Kettenverlängerungsmitteln, ausgewählt aus der Gruppe bestehend aus Bis-aldiminen, Bis-ketiminen, Bis-enaminen und Bis-oxazolidinen, bestehen, als bzw. zur Herstellung von, gegebenenfalls weitere Hilfs- und Zusatzstoffe enthaltenden, selbsthärtenden oder durch den Einfluß von Feuchtigkeit aushärtbaren Verbundmassen für Glaskonstruktionen.

**Claim**

Use of one-component or multi-component systems consisting of

a) a polyisocyanate component consisting of at least one organic polyisocyanate and

b) a polyol component consisting of at least one dihydroxypolyester carbonate having a molecular weight of from 800 to 3,000 which constitutes a reaction product of (i) hexanediol-(1,6), (ii) ε-caprolactone and/or ε-hydroxycaproic acid and (iii) diarylcarbonates, using a molar ratio of (i) : (ii) in the range of from 4 : 1 to 1 : 3, which polyol component is optionally present as a mixture with up to 40 % by weight, based on the total quantity of component b), of other polyols with molecular weights of 62 to 4,000 optionally containing ester groups,

the above components being present in quantities corresponding to an NCO/OH equivalent ratio of from 0.8 to 1.3, or the systems consisting of

c) an isocyanate prepolymer which has been obtained by the reaction of polyol component b) with excess quantities of polyisocyanate component a) and which is optionally present as a mixture with up to ca. 30 % by weight, based on the prepolymer, of organic polyisocyanates other than that used for its preparation, and optionally

d) up to a total of 30 % by weight, based on the isocyanate prepolymer of component c), of diprimary aromatic diamines within the molecular weight range of from 108-400 and/or of chain lengthening agents carrying two blocked amino groups capable of being activated by moisture, selected from the group consisting of bis-aldimines, bis-ketimines, bis-enamines and bis-oxazolidines,

as composite materials for glass constructions or for the preparation of composite materials for glass constructions, which composite materials are self-hardening or capable of being hardened under the influence of moisture and optionally contain further auxiliary agents and additives.

**Revendication**

Utilisation de systèmes à un ou à plusieurs composants qui consistent en

a) un composant polyisocyanate, consistant en au moins un polyisocyanate organique et en

b) un composant polyol, consistant en au moins un carbonate de polyester dihydroxylé d'un poids moléculaire de 800 à 3 000, qui consiste en un produit de réaction (i) d'hexane diol-1,6, (ii) d'ε-caprolactone et/ou d'acide ε-hydroxycaproïque et (iii) de carbonates de diaryle, en respectant un rapport molaire (i) : (ii) de 4 : 1 à 1 : 3, qui se présente éventuellement en mélange avec jusqu'à 40 % en poids, par rapport à la quantité totale du composant b), d'autres polyols présentant éventuellement des groupes ester et d'un poids moléculaire de 62 à 4 000,

en une quantité correspondant à un rapport d'équivalence NCO/OH de 0,8 à 1,3, ou en

c) un prépolymère à NCO qui a été obtenu par réaction du composant polyol b) avec des quantités excédentaires du composant polyisocyanate a) et qui se présente éventuellement en mélange avec jusqu'environ 30 % en poids, par rapport au prépolymère, de polyisocyanates organiques autres que celui utilisé pour sa préparation, et éventuellement en

d) jusqu'à 30 % en poids en tout, par rapport au prépolymère à NCO du composant c), de diamines aromatiques diprimaires ayant un intervalle de poids moléculaire de 108 à 400 et/ou d'agents d'allongement de chaîne bloqués, présentant des groupes amino activables par l'humidité, choisis dans le groupe consistant en bis-aldimines, bis-cétimines, bis-énamines et bis-oxazolidines,

comme masses de collage pour constructions en verre, ou pour la fabrication de celles-ci contenant éventuellement d'autres substances auxiliaires et additives, qui sont auto-durcissantes ou durcissables sous l'influence de l'humidité.